(19) Europäisches Patentamt
European Patent Office
Office européen des brevets

(11) **EP 3 854 645 B1**

(12) **EUROPEAN PATENT SPECIFICATION**

(45) Date of publication and mention
of the grant of the patent:
**22.11.2023 Bulletin 2023/47**

(21) Application number: **21152499.6**

(22) Date of filing: **20.01.2021**

(51) International Patent Classification (IPC):
**B60W 30/095** (2012.01)    **G08G 1/01** (2006.01)
**G08G 1/0967** (2006.01)    **G08G 1/16** (2006.01)

(52) Cooperative Patent Classification (CPC):
**G08G 1/096725; G08G 1/052; G08G 1/096716;
G08G 1/096775; G08G 1/167**

(54) **METHOD, APPARATUS, AND COMPUTER PROGRAM PRODUCT FOR DYNAMICALLY DETECTING DANGEROUS MERGING SITUATIONS**

VERFAHREN, VORRICHTUNG UND COMPUTERPROGRAMMPRODUKT ZUR DYNAMISCHEN ERKENNUNG VON GEFÄHRLICHEN ZUSAMMENFÜHRUNGSSITUATIONEN

PROCÉDÉ, APPAREIL ET PRODUIT PROGRAMME INFORMATIQUE POUR LA DÉTECTION DYNAMIQUE DE SITUATIONS DE FUSION DANGEREUSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.01.2020 US 202016747963**

(43) Date of publication of application:
**28.07.2021 Bulletin 2021/30**

(73) Proprietor: **HERE Global B.V.
5611 ZT Eindhoven (NL)**

(72) Inventors:
• **FOWE, James
Chicago, IL 60606 (US)**
• **BERNHARDT, Bruce
Chicago, IL 60606 (US)**

(74) Representative: **Potter Clarkson
Chapel Quarter
Mount Street
Nottingham NG1 6HQ (GB)**

(56) References cited:
**US-A1- 2019 279 502    US-A1- 2019 383 626**

## Description

## TECHNOLOGICAL FIELD

An example embodiment relates generally to a method and associated apparatus and computer program product for detecting dangerous merging situations and, more particularly, to a method and associated apparatus and computer program product for dynamically detecting dangerous merging situation in near real-time.

## BACKGROUND

Most solutions to safe merging are defined based on static data defining areas of the road network where merging is expected, and the road geometry is designed to allow for safe merging. However, these techniques do not consider dynamic dangerous merging situations, such as on arterial roads where a merging location is not defined on the map but occurs due to a real-time traffic congestion situation. Current techniques do not account for sudden, real-time traffic congestion, especially in areas that congestion is rare. Additionally, most solutions to traffic navigation rely on the fastest route to a destination with little to no consideration of safety of a given route.

US patent application, Pub. No. "US2019383626A1" discloses methods for calculating a lane maneuver delay for different lane maneuvers and different road segments at different times of the day to generate a predicted lane maneuver delay for use in routing and navigation services. A lane maneuver delay value is calculated from the time period a left-turn or right-turn signaling light was kept on before a vehicle completed a lane maneuver.

## BRIEF SUMMARY

A method, apparatus, and computer program product are provided in accordance with an example embodiment in order to dynamically detecting dangerous merging situations. In an example embodiment, a method is provided for dynamically detecting dangerous merging situations. The method includes obtaining speed information for one or more road segments. The speed information includes lane-level traffic speed information. The method also includes determining a source speed of a source lane and a target speed of a target lane based on the speed information. The method further includes determining that a merging instance from the source lane into the target lane would be a dangerous merging situation based on a comparison of the source speed and the target speed. The method still further includes providing a signal based on the determination of a dangerous merging situation.

In some embodiments, the method also includes determining one or more merging indicators relating to a number of dangerous merging situations along one or more routes to a destination. In some embodiments, the method also includes determining a best route to the destination based on a travel time and the merging indicator for each of the one or more routes to a destination. In some embodiments, the method also includes altering a projected route to the destination to the best route based on the determination of the best route.

In some embodiments, the signal is provided to a user in the form of a message. In some embodiments, the one or more merging indicators for one or more routes are updated at a predetermined interval. In some embodiments, the comparison of the source speed and the target speed is a direct comparison.

In another example embodiment, an apparatus is provided for dynamically detecting dangerous merging situations. The apparatus includes at least one processor and at least one non-transitory memory including computer program code instructions, the computer program code instructions configured to, when executed, cause the apparatus to obtain speed information for one or more road segments. The speed information includes lane-level traffic speed information. The computer program code instructions are also configured to, when executed, cause the apparatus to determine a source speed of a source lane and a target speed of a target lane based on the speed information. The computer program code instructions are further configured to, when executed, cause the apparatus to determine that a merging instance from the source lane into the target lane would be a dangerous merging situation based on a comparison of the source speed and the target speed. The computer program code instructions are still further configured to, when executed, cause the apparatus to provide a signal based on the determination of a dangerous merging situation.

In some embodiments, the computer program code instructions are also configured to, when executed, cause the apparatus to determine one or more merging indicators relating to a number of dangerous merging situations along one or more routes to a destination. In some embodiments, the computer program code instructions are also configured to, when executed, cause the apparatus to determine a best route to the destination based on a travel time and the merging indicator for each of the one or more routes to a destination. In some embodiments, the computer program code instructions are also configured to, when executed, cause the apparatus to alter a projected route to the destination to the best route based on the determination of the best route.

In some embodiments, the signal is provided to a user in the form of a message. In some embodiments, the one or more merging indicators for one or more routes are updated at a predetermined interval. In some embodiments, the comparison of the source speed and the target speed is a direct comparison.

In still another example embodiment, a computer program product is provided. The computer program product includes at least one non-transitory computer-readable storage medium having computer-executable program code portions stored therein, the computer-executable program code portions including program code instructions configured to obtain speed information for one or more road segments. The speed information includes lane-level traffic speed information. The computer-executable program code portions also include program code instructions configured to determine a source speed of a source lane and a target speed of a target lane based on the speed information. The computer-executable program code portions further include program code instructions configured to determine that a merging instance from the source lane into the target lane would be a dangerous merging situation based on a comparison of the source speed and the target speed. The computer-executable program code portions still further include program code instructions configured to provide a signal based on the determination of a dangerous merging situation.

In some embodiments, the program code instructions are further configured to determine one or more merging indicators relating to a number of dangerous merging situations along one or more routes to a destination. In some embodiments, the program code instructions are further configured to determine a best route to the destination based on a travel time and the merging indicator for each of the one or more routes to a destination. In some embodiments, the program code instructions are further configured to alter a projected route to the destination to the best route based on the determination of the best route. In some embodiments, the signal is provided to a user in the form of a message. In some embodiments, the one or more merging indicators for one or more routes are updated at a predetermined interval.

In still another example embodiment, an apparatus is provided for dynamically detecting dangerous merging situations. The apparatus includes means for obtaining speed information for one or more road segments. The speed information includes lane-level traffic speed information. The apparatus also includes means for determining a source speed of a source lane and a target speed of a target lane based on the speed information. The apparatus further includes means for determining that a merging instance from the source lane into the target lane would be a dangerous merging situation based on a comparison of the source speed and the target speed. The apparatus still further includes means for providing a signal based on the determination of a dangerous merging situation.

In some embodiments, the apparatus also includes means for determining one or more merging indicators relating to a number of dangerous merging situations along one or more routes to a destination. In some embodiments, the apparatus also includes means for determining a best route to the destination based on a travel time and the merging indicator for each of the one or more routes to a destination. In some embodiments, the apparatus also includes means for altering a projected route to the destination to the best route based on the determination of the best route.

In some embodiments, the signal is provided to a user in the form of a message. In some embodiments, the one or more merging indicators for one or more routes are updated at a predetermined interval. In some embodiments, the comparison of the source speed and the target speed is a direct comparison.

The above summary is provided merely for purposes of summarizing some example embodiments to provide a basic understanding of some aspects of the disclosure. Accordingly, it will be appreciated that the above-described embodiments are merely examples and should not be construed to narrow the scope of the disclosure in any way. It will be appreciated that the scope of the disclosure encompasses many potential embodiments in addition to those here summarized, some of which will be further described below.

## BRIEF DESCRIPTION OF THE DRAWINGS

Having thus described certain example embodiments of the present disclosure in general terms, reference will hereinafter be made to the accompanying drawings, which are not necessarily drawn to scale, and wherein:

Figure 1 is a block diagram of an apparatus configured in accordance with an example embodiment of the present disclosure;

Figure 2 is a flowchart illustrating the operations performed, such as by the apparatus of Figure 1, in accordance with an example embodiment of the present disclosure; and

Figure 3 is a map illustrating an example merging situation in accordance with an example embodiment of the present disclosure.

## DETAILED DESCRIPTION

Some embodiments will now be described more fully hereinafter with reference to the accompanying drawings, in which some, but not all, embodiments are shown. Indeed, various embodiments may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present disclosure. Thus, use of any such terms should not be taken to limit the scope of embodiments of the present disclosure.

A method, apparatus, and computer program product are provided in accordance with an example embodiment of the present disclosure for dynamic detection of dangerous merging situations. In an example embodiment, the method, apparatus, and computer program are provided for facilitating autonomous and semi-autonomous driving in a multi-lane environment (e.g., an interstate). Merging between lanes with vehicles travelling at vastly different speeds (e.g., a slow lane and a faster moving lane) can be difficult for both autonomous and non-autonomous vehicles, especially in places where congestion is abnormal. As described below, the method, apparatus, and computer program product of an example embodiment leverages known lane-level traffic information, to facilitate detection of the safety level of a potential merging instance. Although described in conjunction with autonomous and semi-autonomous vehicles, the method, apparatus, and computer program product of an example embodiment may also be utilized in conjunction with manually-driven vehicles.

Merging lane situations in general are somewhat challenging for human drivers and even more so for autonomous vehicles (AV). For known or expected merge locations, the road networks may have to be designed to make merging easier and safer, but these features do not exist for unexpected merging locations. For example, a vehicle attempting to change lanes and merge into a congested lane (from a non-congested lane) poses a danger to the on-coming vehicles upstream that are driving at faster speeds and also the vehicles in the congested lane may not be expecting the "merge request" from this vehicle, hence it will take a while for them to react and give space to merge. Various embodiments of the present disclosure allow for automatic detection of dangerous merging situations in near real-time, such that an apparatus 10 herein can determine the existence of a dangerous merging situation and subsequently notify a user and/or update the vehicle route.

Various embodiments of the present disclosure may allow for (1) safety-based routing, (2) dynamic calculations in near real-time, (3) machine learning from pervious iterations (e.g., the operations discussed herein may be analyzed over a period of time such as a season, a year, or multiple years to create a prediction for the road network and may aid predictive routing engine), and (4) identification of unsafe road segments (e.g., for the government to improve).

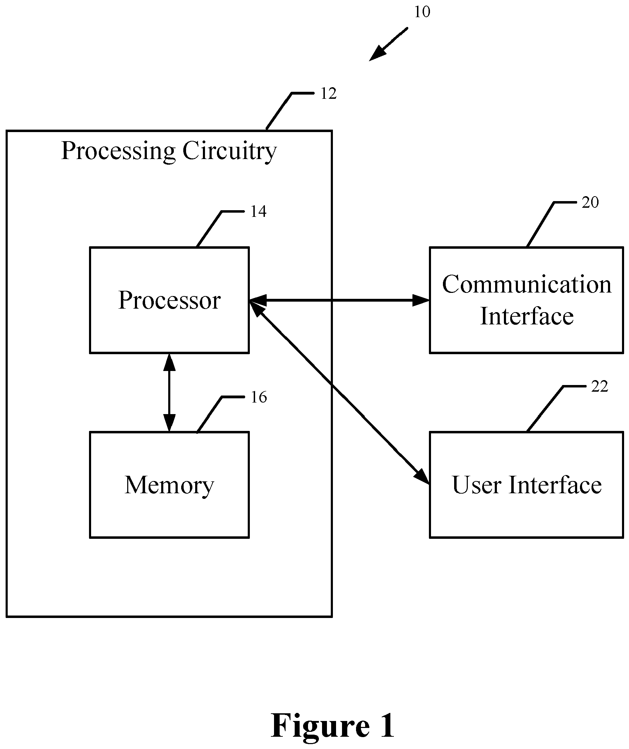

Figure 1 is a schematic diagram of an example apparatus configured for performing any of the operations in accordance with an example embodiment as described herein. Apparatus 10 may be embodied by or associated with any of a variety of computing devices that include or are otherwise associated with a device configured for providing an advanced driver assistance features. For example, the computing device may be an Advanced Driver Assistance System module (ADAS) which may at least partially control autonomous or semi-autonomous features of a vehicle; however embodiments of the apparatus may be embodied or partially embodied as a mobile terminal, such as a personal digital assistant (PDA), mobile telephone, smart phone, personal navigation device, smart watch, tablet computer, camera or any combination of the aforementioned and other types of voice and text communications systems. In various embodiments, the apparatus may be carried onboard the vehicle or be remote from the vehicle (e.g., offboard of vehicle). In one embodiment, the apparatus 10 is embodied or partially embodied by an electronic control unit of a vehicle that supports safety-critical systems such as the powertrain (engine, transmission, electric drive motors, etc.), steering (*e.g.*, steering assist or steer-by-wire), and braking (*e.g.*, brake assist or brake-by-wire). Alternatively, the computing device may be a fixed computing device, such as a built-in vehicular navigation device, assisted driving device, or the like.

Optionally, the apparatus may be embodied by or associated with a plurality of computing devices that are in communication with or otherwise networked with one another such that the various functions performed by the apparatus may be divided between the plurality of computing devices that operate in collaboration with one another.

The apparatus 10 may include, be associated with, or may otherwise be in communication with a processing circuitry 12, which includes a processor 14 and a memory device 16, a communication interface 20, and a user interface 22. In some embodiments, the processor 14 (and/or co-processors or any other processing circuitry assisting or otherwise associated with the processor) may be in communication with the memory device 16 via a bus for passing information among components of the apparatus. The memory device 16 may be non-transitory and may include, for example, one or more volatile and/or non-volatile memories. In other words, for example, the memory device 16 may be an electronic storage device (for example, a computer readable storage medium) comprising gates configured to store data (for example, bits) that may be retrievable by a machine (for example, a computing device like the processor). The memory device may be configured to store information, data, content, applications, instructions, or the like for enabling the apparatus to carry out various functions in accordance with an example embodiment of the present disclosure. For example, the memory device could be configured to buffer input data for processing by the processor. Additionally or alternatively, the memory device could be configured to store instructions for execution by the processor.

The processor 14 may be embodied in a number of different ways. For example, the processor 14 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 14 may be configured to execute instructions stored in the memory device 16 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present disclosure while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (for example, the computing device) configured to employ an embodiment of the present disclosure by further configuration of the processor by instructions for performing the algorithms and/or operations described herein. The processor may include, among other things, a clock, an arithmetic logic unit (ALU) and logic gates configured to support operation of the processor.

The apparatus 10 of an example embodiment may also include or otherwise be in communication with a user interface 22. The user interface may include a touch screen display, a speaker, physical buttons, and/or other input/output mechanisms. In an example embodiment, the processor 14 may comprise user interface circuitry configured to control at least some functions of one or more input/output mechanisms. The processor and/or user interface circuitry comprising the processor may be configured to control one or more functions of one or more input/output mechanisms through computer program instructions (for example, software and/or firmware) stored on a memory accessible to the processor (for example, memory device 16, and/or the like). The user interface may be embodied in the same housing as the processing circuitry, such as in a navigation system.

The apparatus 10 of an example embodiment may also optionally include a communication interface 20 that may be any means such as a device or circuitry embodied in either hardware or a combination of hardware and software that is configured to receive and/or transmit data from/to other electronic devices in communication with the apparatus, such as by near field communication (NFC) or other proximity-based techniques. Additionally or alternatively, the communication interface may be configured to communicate via cellular or other wireless protocols including Global System for Mobile Communications (GSM), such as but not limited to Long Term Evolution (LTE). In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication for vehicle to vehicle or vehicle to infrastructure wireless links. In example embodiments, the communication interface 20 may receive and transmit lane data for one or more lanes from a traffic service provider (TSP). For example, communication interface 20 may receive lane-level speed information for one or more road segments (e.g., along a route).

Autonomous driving has become a focus of recent technology with recent advances in machine learning, computer vision, and computing power able to conduct real-time sensing of a vehicle's condition and environment. With that, there is an opportunity to improve safety of vehicles, either autonomous or otherwise, by proactively determining dangerous merging situations and allows for a balance between the safety of a route and the travel time required for a trip. In this regard, a real-time, or near real-time, determination of dangerous merging situations allows for increased safety in vehicles.

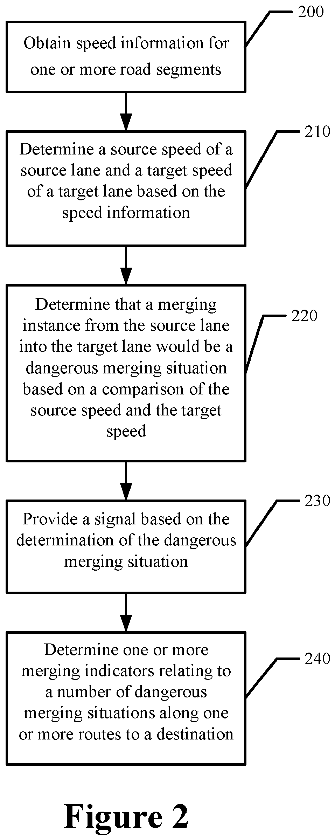

Referring now to Figure 2, the operations performed by the apparatus 10 of an example embodiment of the present disclosure includes means, such as the processing circuitry 12, the processor 14 or the like, for dynamically detecting dangerous merging situations. In an example embodiment, detailed herein, the method, apparatus, and computer program product could be used in relation to vehicles including both autonomous vehicles and manually-operated vehicles.

As shown in block 200 of Figure 2, the apparatus 10 includes means, such as the processing circuitry 12, the processor 14 or the like, for obtaining speed information for one or more road segments. In some embodiments, the speed information includes lane-level traffic speed information. In some embodiments, the speed information may be received from a TSP. In some embodiments, the speed information may include information relating to the speed of each lane of a road segment. In some embodiments, the apparatus 10 includes means, such as the processing circuitry 12, the processor 14, the communication interface 20, or the like, for requesting speed information for one or more road segments. For example, the apparatus 10 may request speed information for one or more road segments proximate the vehicle.

Additionally or alternatively, the apparatus 10 may request speed information for one or more road segments along one or more routes (e.g., a group of potential routes). In some embodiments, the speed information may include lane-level traffic speed differences (e.g., direction-based traffic). For example, the apparatus 10 may receive the difference between two or more lanes of traffic instead of a speed itself.

Referring now to Block 210 of Figure 2, the apparatus 10 includes means, such as the processing circuitry 12, the processor 14 or the like, for determining a source speed of a source lane and a target speed of a target lane based on the speed information. In some embodiments, the source lane may be the lane a vehicle is currently, or likely will be travelling, on during traversal of a given road segment. In various embodiments, the source speed may be the speed of one or more vehicles travelling in the source lane. In some embodiments, the source speed may be the speed of one or more vehicles travelling in the source lane at or near real-time. In some embodiments, the source speed may be an average of two or more vehicles travelling in the source lane, the speed of another vehicle travelling in the source lane, the speed of a vehicle carrying, or in communication with, the apparatus 10 discussed herein, or the like.

In some embodiments, the target lane may be a lane that the vehicle needs, or would be beneficial, to be on to maintain a given route. Similar to the source speed above, the target speed may be the speed of one or more vehicles travelling in the target lane. In some embodiments, the target speed may be the speed of one or more vehicle travelling in the target lane at or near real-time. In some embodiments, the target speed may be an average of two or more vehicles travelling in the target lane, the speed of a vehicle travelling in the target lane, or the like. For example, along a multi-lane road segment, only one lane may allow a vehicle to exit (e.g., the right lane) and the vehicle may be in another lane (e.g., the middle lane) and in such an example the source lane may be the lane the vehicle is travelling, and the exit lane may be the target lane. In some embodiments, the apparatus 10 may include means, such as the processing circuitry 12, for using vehicle speed information as the source speed. In some embodiments, the apparatus 10 may include means, such as the communication interface 20, for receiving speed information from one or more vehicles in a target lane (e.g., using V2X or V2V technology).

As discussed above in reference to Block 200, the apparatus 10 may include means, such as the communication interface 20, for receiving lane-level traffic speed information. In some embodiments, the apparatus 10 includes means, such as the processing circuitry 12, for receiving speed information from a plurality of sources. For example, the apparatus 10 may receive speed information from a TSP and/or another vehicle travelling a road segment. In some embodiments, the lane-level traffic information may include the speed of one or more of the lanes. In some embodiments, the lane-level traffic speed information may include a difference in speeds between two or more lanes. In some embodiments, the apparatus 10 may include means, such as the processing circuitry 12, the processor 14, or the like, for determining the speed of each lane based on the lane-level traffic speed difference. For example, the apparatus 10 may receive information relating to the speed of one lane to be used to determine the speed of other lanes (e.g., the speed of the vehicle travelling along a given lane may be used for the speed of that lane). In some embodiments, the apparatus 10 may include means, such as the processing circuitry 12, the processor 14, or the like for using lane-level map matching (LLMM) to localize the vehicle on a lane. In some embodiments, the apparatus 10 may also include means for using LLMM to obtain the lane-level navigation details for one or more routes. For a route, the apparatus 10 may include means, such as the processing circuitry 12, for computing the merging indicator for the entirety of one or more routes. For example, the operations described in reference to Blocks 200-220 may be repeated over the entirety of a route. In some embodiments, the apparatus 10 may use the speed information for a segment of roadway to determine the speed of each lane along the road segment. In various embodiments, some or all of the speed information for one or more road segments may be received from V2X, satellite, radar, and/or infrastructure video feeds sources.

In some embodiments, the apparatus 10 may include means, such as the processing circuitry 12, for using vehicle speed information as the source speed. In some embodiments, the apparatus 10 may include means, such as the communication interface 20, for receiving speed information from one or more vehicles in a target lane (e.g., using V2X, V2V, satellite, radar, infrastructure video feeds, and/or the like).

Referring now to Block 220 of Figure 2, the apparatus 10 includes means, such as the processing circuitry 12, the processor 14 or the like, for determining that a merging instance from the source lane into the target lane would be a dangerous merging situation based on a comparison of the source speed ($V_s$) and the target speed ($V_d$). In some embodiments, the comparison of the source speed ($V_s$) and the target speed ($V_d$) may be a direct comparison. In various embodiments, the following equation may be used to determine a dangerous merging situation value (DDM):

$$DDM = \frac{\max\left(V_s, V_d\right)}{\min\left(V_s, V_d\right)}$$

In such an embodiment, the DDM is directly proportional to the ratio of the source speed ($V_s$) and the target speed ($V_d$). In an instance the source speed ($V_s$) is greater than the target speed ($V_d$), then the DDM may be defined as the source speed ($V_s$) over the target speed ($V_d$). In an instance the source speed ($V_s$) is less than

the target speed ($V_d$), then the DDM may be defined as the target speed ($V_d$) over the source speed ($V_s$). In either embodiment, the higher the DDM, the more dangerous a merging situation. In some embodiments, the apparatus 10 may be configured to associate a certain threshold level of DDM as a dangerous merging situation. For example, in an instance the DDM is greater than 2, the apparatus 10 may determine that a dangerous merging situation is present. In an example embodiment, the DDM threshold may be configured such that a dangerous merging situation may be defined as an instance that vehicle merging into another lane requires vehicles on the target lane to produce a reaction to create space for the vehicle merging. In an example embodiment, the DDM equation may be inverted such that the lower the DDM, the more danger involved with a given merging situation. In various embodiments, the DDM threshold may be based on a user risk preference. In some embodiments, the DDM threshold may have a predetermined value (e.g., in an instance a user risk preference is not received). For example, the default DDM threshold may be 1.5.

Referring now to Block 230 of Figure 2, the apparatus 10 includes means, such as the processing circuitry 12, the processor 14 or the like, for providing a signal based on the determination of the dangerous merging situation. The signal provided may be any response by the apparatus, such as the processing circuitry 12, the processor 14 or the like, to the determination of the dangerous merging situation. For autonomous vehicles, this signal may be configured to cause a vehicle to merge into the adjacent lane without driver interaction. In some embodiments, the user may be able to determine whether an autonomous vehicle will automatically merge or ask for the approval of an alteration from the user. For autonomous vehicles that retain human driver features, the apparatus, such as the processor 12, of an example embodiment may allow for a driver to override the merging action and/or the alteration of route. In some embodiments, autonomous vehicles with a driver override may notify the driver of the impending alteration in route and permit driver override, if desired.

In some embodiments, for semi-autonomous or non-autonomous, manually-operated vehicles, the signal may be configured to cause a message to be communicated to the driver of the vehicle. The message may be provided in various forms and may notify the driver of the merger information. In various embodiments, the message may be audible and/or visual. In some embodiments, the message may be communicated through preexisting interfaces, such as a navigation system, infotainment system, or a speaker system. Additionally or alternatively, the message may be communicated through a dedicated interface element, such as a light on the dashboard. In various embodiments, the information provided in the message may include source speed, the target speed, the DDM, an alternative route (e.g., the best route), and/or the like. Notwithstanding the foregoing examples, there are many ways to communicate the signal to the driver.

Referring now to Block 240 of Figure 2, the apparatus 10 includes means, such as the processing circuitry 12, the processor 14 or the like, for determining one or more merging indicators relating to a number of dangerous merging situations along one or more routes to a destination. In various embodiments, the operations of Blocks 200-220 may be carried out on the entirety of one or more routes (e.g., a projected route and alternative route(s)). In various embodiments, the merging indicator may be an aggregate of a plurality of DDM calculated along a route. As shown in the equation below, the merging indicator ($\overline{DDM_R}$) may be the summation of the DDM determined for a route.

$$\overline{DDM_R} = \sum_{k=1}^{N} DDM$$

As above with the DDM, the higher the merging indicator, the more dangerous a route may be for a vehicle. In some embodiments, the apparatus 10 includes means, such as the processing circuitry 12, for calculating the merging indicator for one or more routes determined by a routing algorithm (e.g., determine a merging indicator for each route produced by a routing algorithm). In an instance a route may require merging lanes and the merging indicator is high, an alternative route may be selected. In some embodiments, the one or more merging indicators for one or more routes are updated at a predetermined interval. For example, the merging indicators may be updated every 15 minutes to account for changes in merging situations.

In some embodiments, the apparatus 10 includes means, such as the processing circuitry 12, the processor 14, or the like, for determining a best route to the destination based on a travel time and the merging indicator for each of the one or more routes to a destination. In some embodiments, the apparatus 10 may include means, such as the processing circuitry for determining a total cost of traversing a route that incorporates both the travel time of the route and the merging indicator for a given route. For example, the total cost of a route may be the resultant of the total travel time (t) multiplied by the merging indicator $\overline{DDM_R}$ for a route. In some embodiments, the apparatus 10 includes means, such as the processing circuitry 12, for determining the "best route" based on a comparison of the total cost for a plurality of potential routes (e.g., the lowest total cost may be selected as the best route). For example, the total cost of a route may be determined using the following equation:

$$Total\ Cost = \overline{DDM_R} * t$$

For example, in an example embodiment, a first route may have a five minute total travel time (t) with a relatively high merging indicator ($DDM_R$) of two, while a second route may have a total travel time of seven minutes with a lower merging indicator of 1.2. In such an example, the total cost of the first route may be 10, while the total cost of the second route may be 8.4, such that the apparatus 10 may determine that the second route is the "best route" even though it is two minutes slower than the first route. In some embodiments, one of the merging indicator or total travel time may be weighted more heavily than the other (e.g., the apparatus 10 may prefer safe routes over fast routes or vice versa).

In some embodiments, the apparatus 10 includes means, such as the processing circuitry 12, the processor 14, or the like, for altering a projected route to the destination to the best route based on the determination of the best route. In some embodiments, the altered projected route (e.g., the best route) may be communicated to the user such as discussed in reference to Block 230 above. Alternatively, the apparatus 10 may include means, such as the processing circuitry 12, for altering the route of vehicle in an instance the vehicle is an autonomous vehicle.

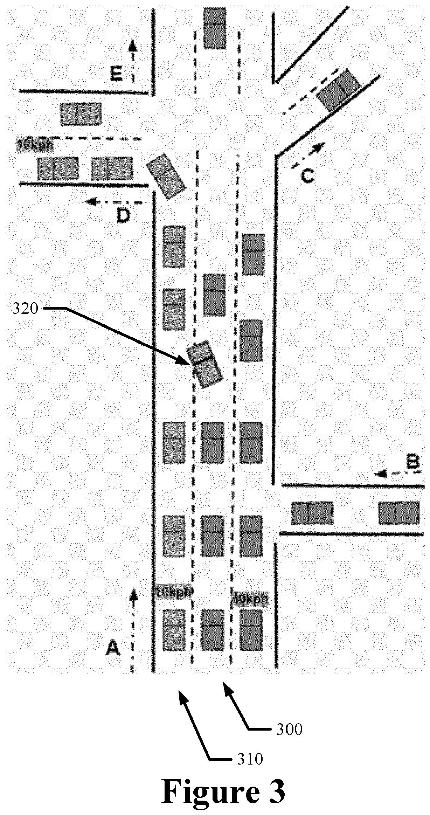

Referring now to Figure 3, an example merging situation is provided that may by dynamically detected using an example embodiment of the present disclosure. For the example shown, the vehicle 320 may be travelling along a lane 300 of a roadway. In an example embodiment, the projected route of the vehicle 320 may include turning left onto roadway D, which requires the vehicle 320 to move from lane 300 into lane 310. In the example, lane 300 has a speed (e.g., source speed) of 40 kilometers per hour (kph), while lane 310 has a speed (e.g., target speed) of 10 kph. Using the operations discussed above, the apparatus 10 may determine that the DDM for merging into lane 300 may be 4 (e.g., source speed of 40 kph divided by target speed of 10 kph). In various embodiments, the DDM may be above the predetermined threshold, such that the apparatus 10 may provide a signal indicating the dangerous merging situation. In some embodiments, the apparatus 10 may update the projected route (e.g., continuing along road E instead of turning onto road D). In various embodiments, the apparatus 10 may provide a message to a user indicating that a merging instance may be dangerous.

Various embodiments of the methods, apparatuses, and computer program products provided herein allow for dynamic detection of dangerous merging situations. In an example embodiment, the method, apparatus, and computer program are provided for facilitating autonomous and semi-autonomous driving in a multi-lane environment (e.g., an interstate). Merging between lanes with vehicles travelling at vastly different speeds (e.g., a slow lane and a faster moving lane) can be difficult for both autonomous and non-autonomous vehicles, especially in places where congestion is abnormal. As described below, the method, apparatus, and computer program product of an example embodiment leverages advances in driver assistance features, along with known lane-level traffic information, to facilitate detection of the safety level of a potential merging instance. Although described in conjunction with autonomous and semi-autonomous vehicles, the method, apparatus, and computer program product of an example embodiment may also be utilized in conjunction with manually-driven vehicles.

As described above, Figure 2 illustrates a flowchart of an apparatus 10, method, and computer program product according to example embodiments of the disclosure. It will be understood that each block of the flowchart, and combinations of blocks in the flowchart, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by the memory device 16 of a software development test platform employing an embodiment of the present disclosure and executed by the processing circuitry 12, the processor 14 or the like of the software development test platform. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included. Modifications, additions, or amplifications to the operations above may be performed in any order and in any combination.

Many modifications and other embodiments of the disclosures set forth herein will come to mind to one skilled in the art to which these disclosures pertain having the benefit of the teachings presented in the foregoing descriptions and the associated drawings. Therefore, it is to be understood that the disclosures are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

**Claims**

1. A computer-implemented method of dynamically detecting dangerous merging situations, the method comprising:

   obtaining speed information for one or more road segments, wherein the speed information comprises lane-level traffic speed information,
   based on the speed information, determining a source speed of a source lane (300) and a target speed of a target lane (310);
   determining a dangerous merging situation value based on a comparison of the source speed and the target speed,
   determining that a merging instance from the source lane into the target lane would be a dangerous merging situation based on the dangerous merging situation value;
   performing the preceding steps repeatedly over the entirety of one or more routes to a destination to determine respective one or more merging indicators, wherein each merging indicator is an aggregate of a plurality of dangerous merging situation values calculated along a respective route;
   altering a projected route to the destination to a best route to the destination, wherein the best route is determined based on a travel time and the merging indicator for each of the one or more routes; and providing a signal based on the determination of at least one dangerous merging situation, wherein the signal is configured to cause one of the route of an autonomous vehicle (320) to be altered to the altered projected route without driver interaction and a message including the altered projected route to be communicated to a driver of a vehicle (320).

2. The method of Claim 1, wherein the one or more merging indicators for one or more routes are updated at a predetermined interval.

3. The method of Claim 1, wherein the comparison of the source speed and the target speed is a direct comparison.

4. An apparatus (10) for dynamically detecting dangerous merging situations, the apparatus comprising at least one processor (14) and at least one non-transitory memory (16) including computer program code instructions, the computer program code instructions configured to, when executed, cause the apparatus to:

   obtain speed information for one or more road segments, wherein the speed information comprises lane-level traffic speed information,
   based on the speed information, determine a source speed of a source lane (300) and a target speed of a target lane (310);
   determine a dangerous merging situation value based on a comparison of the source speed and the target speed,
   determine that a merging instance from the source lane into the target lane would be a dangerous merging situation based on the dangerous merging situation value;
   perform the preceding steps repeatedly over the entirety of one or more routes to a destination to determine respective one or more merging indicators, wherein each merging indicator is an aggregate of a plurality of dangerous merging situation values calculated along a respective route;
   alter a projected route to the destination to a best route to the destination, wherein the best route is determined based on a travel time and the merging indicator for each of the one or more routes; and
   provide a signal based on the determination of at least one dangerous merging situation, wherein the signal is configured to cause one of the route of an autonomous vehicle (320) to be altered to the altered projected route without driver interaction and a message including the altered projected route to be communicated to a driver of a vehicle (320).

**5.** The apparatus of Claim 4, wherein the one or more merging indicators for one or more routes are updated at a predetermined interval.

**6.** The apparatus of Claim 4, wherein the comparison of the source speed and the target speed is a direct comparison.

**7.** A computer program product comprising at least one non-transitory computer-readable storage medium having computer-executable program code portions stored therein, the computer-executable program code portions comprising program code instructions which, when the program code is executed by a computer, cause the computer to carry out the steps:

> obtain speed information for one or more road segments, wherein the speed information comprises lane-level traffic speed information,
> based on the speed information, determine a source speed of a source lane (300) and a target speed of a target lane (310);
> determine a dangerous merging situation value based on a comparison of the source speed and the target speed,
> determine that a merging instance from the source lane into the target lane would be a dangerous merging situation based on the dangerous merging situation value;
> perform the preceding steps repeatedly over the entirety of one or more routes to a destination to determine respective one or more merging indicators, wherein each merging indicator is an aggregate of a plurality of dangerous merging situation values calculated along a respective route;
> alter a projected route to the destination to a best route to the destination, wherein the best route is determined based on a travel time and the merging indicator for each of the one or more routes; and
> provide a signal based on the determination of at least one dangerous merging situation, wherein the signal is configured to cause one of the route of an autonomous vehicle (320) to be altered to the altered projected route without driver interaction and a message including the altered projected route to be communicated to a driver of a vehicle (320).

**8.** The computer program product of claim 7, wherein the one or more merging indicators for one or more routes are updated at a predetermined interval.

**9.** The computer program product of claim 7, wherein the comparison of the source speed and the target speed is a direct comparison.

**Patentansprüche**

**1.** Computerimplementiertes Verfahren zur dynamischen Erkennung gefährlicher Einfädelsituationen, wobei das Verfahren Folgendes umfasst:

> Erhalten von Geschwindigkeitsinformationen für einen oder mehrere Straßenabschnitte, wobei die Geschwindigkeitsinformationen Verkehrsgeschwindigkeitsinformationen auf Spurebene umfassen,
> Bestimmen einer Quellgeschwindigkeit einer Quellspur (300) und einer Zielgeschwindigkeit einer Zielspur (310) basierend auf den Geschwindigkeitsinformationen;
> Ermitteln eines Wertes für eine gefährliche Einfädelsituation basierend auf einem Vergleich der Quellgeschwindigkeit und der Zielgeschwindigkeit,
> Bestimmen, dass ein Einfädelvorgang von der Quellspur in die Zielspur eine gefährliche Einfädelsituation darstellen würde, basierend auf dem Wert der gefährlichen Einfädelsituation;
> wiederholtes Durchführen der vorhergehenden Schritte über die Gesamtheit einer oder mehrerer Routen zu einem Ziel, um jeweils einen oder mehrere Einfädelungsindikatoren zu bestimmen,
> wobei jeder Einfädelungsindikator eine Summe mehrerer gefährlicher Einfädelungssituationswerte ist, die entlang einer jeweiligen Route berechnet werden;
> Ändern einer geplanten Route zum Ziel in eine beste Route zum Ziel, wobei die beste Route basierend auf einer Reisezeit und dem Einfädelungsindikator für jede der einen oder mehreren Routen bestimmt wird; und Bereitstellen eines Signals basierend auf der Feststellung mindestens einer gefährlichen Einfädelsituation, wobei das Signal dazu konfiguriert ist, zu bewirken, dass eine der Routen eines autonomen Fahrzeugs (320) ohne Interaktion des Fahrers in die geänderte geplante Route geändert wird und eine Nachricht, die die geänderte geplante Route enthält, an einen Fahrer eines Fahrzeugs (320) übermittelt wird.

**2.** Verfahren nach Anspruch 1, wobei der eine oder die mehreren Einfädelungsindikatoren für eine oder mehrere Routen in einem vorgegebenen Intervall aktualisiert werden.

**3.** Verfahren nach Anspruch 1, wobei der Vergleich der Quellgeschwindigkeit und der Zielgeschwindigkeit ein direkter Vergleich ist.

**4.** Vorrichtung (10) zur dynamischen Erkennung gefährlicher Einfädelsituationen, wobei die Vorrichtung mindestens einen Prozessor (14) und mindestens einen nichtflüchtigen Speicher (16) umfasst, der Computerprogrammcode-Anweisungen enthält, wobei die Computerprogrammcode-Anweisungen so konfiguriert sind, dass sie bei ihrer Ausführung die Vorrichtung dazu veranlassen:

Geschwindigkeitsinformationen für einen oder mehrere Straßenabschnitte zu erhalten, wobei die Geschwindigkeitsinformationen Verkehrsgeschwindigkeitsinformationen auf Spurebene umfassen,

eine Quellgeschwindigkeit einer Quellspur (300) und eine Zielgeschwindigkeit einer Zielspur (310) basierend auf den Geschwindigkeitsinformationen zu bestimmen;

einen Wert für eine gefährliche Einfädelsituation anhand eines Vergleichs der Quellgeschwindigkeit und der Zielgeschwindigkeit zu ermitteln, basierend auf dem Wert der gefährlichen Einfädelsituation zu bestimmen, dass eine Einfädelungsinstanz von der Quellspur in die Zielspur eine gefährliche Einfädelsituation darstellen würde;

die vorhergehenden Schritte wiederholt über die Gesamtheit einer oder mehrerer Routen zu einem Ziel durchzuführen, um jeweils einen oder mehrere Einfädelungsindikatoren zu bestimmen, wobei jeder Einfädelungsindikator eine Summe mehrerer gefährlicher Einfädelungssituationswerte ist, die entlang einer jeweiligen Route berechnet werden;

eine geplante Route zum Ziel in eine beste Route zum Ziel zu ändern, wobei die beste Route basierend auf einer Reisezeit und dem Einfädelungsindikator für jede der einen oder mehreren Routen bestimmt wird; und

ein Signal basierend auf der Bestimmung mindestens einer gefährlichen Einfädelsituation bereitzustellen, wobei das Signal dazu konfiguriert ist, zu bewirken, dass eine der Routen eines autonomen Fahrzeugs (320) ohne Interaktion des Fahrers in die geänderte geplante Route geändert wird und eine Nachricht, die die geänderte geplante Route enthält, an einen Fahrer eines Fahrzeugs (320) übermittelt wird.

**5.** Vorrichtung nach Anspruch 4, wobei der eine oder die mehreren Einfädelungsindikatoren für eine oder mehrere Routen in einem vorgegebenen Intervall aktualisiert werden.

**6.** Vorrichtung nach Anspruch 4, wobei der Vergleich der Quellengeschwindigkeit und der Zielgeschwindigkeit ein direkter Vergleich ist.

**7.** Computerprogrammprodukt, das mindestens ein nichtflüchtiges computerlesbares Speichermedium mit darin gespeicherten computerausführbaren Programmcodeteilen umfasst, wobei die computerausführbaren Programmcodeteile Programmcodeanweisungen umfassen, die, wenn der Programmcode von einem Computer ausgeführt wird, den Computer veranlassen, die folgenden Schritte auszuführen:

Erhalten von Geschwindigkeitsinformationen für einen oder mehrere Straßenabschnitte, wobei die Geschwindigkeitsinformationen Verkehrsgeschwindigkeitsinformationen auf Spurebene umfassen,

Bestimmen einer Quellgeschwindigkeit einer Quellspur (300) und einer Zielgeschwindigkeit einer Zielspur (310) basierend auf den Geschwindigkeitsinformationen;

Ermitteln eines Wertes für eine gefährliche Einfädelsituation basierend auf einem Vergleich der Quellgeschwindigkeit und der Zielgeschwindigkeit,

Bestimmen, dass ein Einfädelvorgang von der Quellspur in die Zielspur eine gefährliche Einfädelsituation darstellen würde, basierend auf dem Wert der gefährlichen Einfädelsituation;

Wiederholtes Durchführen der vorhergehenden Schritte über die Gesamtheit einer oder mehrerer Routen zu einem Ziel, um jeweils einen oder mehrere Einfädelungsindikatoren zu bestimmen, wobei jeder Einfädelungsindikator eine Summe mehrerer gefährlicher Einfädelungssituationswerte ist, die entlang einer jeweiligen Route berechnet wurden;

Ändern einer geplanten Route zum Ziel in eine beste Route zum Ziel, wobei die beste Route basierend auf einer Reisezeit und dem Einfädelungsindikator für jede der einen oder mehreren Routen bestimmt wird; und

Bereitstellen eines Signals basierend auf der Bestimmung mindestens einer gefährlichen Einfädelsituation, wobei das Signal dazu konfiguriert ist, zu bewirken, dass eine der Routen eines autonomen Fahrzeugs (320) ohne Interaktion des Fahrers in die geänderte geplante Route geändert wird und eine Nachricht, die die geänderte geplante Route enthält, an einen Fahrer eines Fahrzeugs (320) übermittelt wird.

**8.** Computerprogrammprodukt nach Anspruch 7, wobei der eine oder die mehreren Einfädelungsindikatoren für eine oder mehrere Routen in einem vorgegebenen Intervall aktualisiert werden.

**9.** Computerprogrammprodukt nach Anspruch 7, wobei der Vergleich der Quellgeschwindigkeit und der Zielgeschwindigkeit ein direkter Vergleich ist.

## Revendications

**1.** Procédé mis en œuvre par ordinateur pour la détection dynamique de situations de fusion dangereuses, le procédé comprenant :

l'obtention d'informations de vitesse pour un ou plusieurs segments de route, dans lequel les informations de vitesse comprennent des informations de vitesse de circulation au niveau de la voie,
sur la base des informations de vitesse, la détermination d'une vitesse source d'une voie source (300) et d'une vitesse cible d'une voie cible (310) ;
la détermination d'une valeur de situation de fusion dangereuse sur la base d'une comparaison de la vitesse source et de la vitesse cible,
la détermination du fait qu'un cas de fusion de la voie source dans la voie cible constituerait une situation de fusion dangereuse sur la base de la valeur de situation de fusion dangereuse ;
l'exécution des étapes précédentes de manière répétée sur l'intégralité d'un ou de plusieurs itinéraires vers une destination pour déterminer un ou plusieurs indicateurs de fusion respectifs, dans lequel chaque indicateur de fusion est un agrégat d'une pluralité de valeurs de situation de fusion dangereuse calculées le long d'un itinéraire respectif ;
la modification d'un itinéraire projeté vers la destination en un meilleur itinéraire vers la destination, dans lequel le meilleur itinéraire est déterminé sur la base d'un temps de trajet et de l'indicateur de fusion pour chacun des un ou plusieurs itinéraires ; et la fourniture d'un signal sur la base de la détermination d'au moins une situation de fusion dangereuse, dans lequel le signal est configuré pour provoquer la modification de l'un des itinéraires d'un véhicule autonome (320) vers l'itinéraire projeté et modifié sans interaction du conducteur et la communication d'un message comportant l'itinéraire projeté et modifié à un conducteur d'un véhicule (320).

**2.** Procédé selon la revendication 1, dans lequel les un ou plusieurs indicateurs de fusion pour un ou plusieurs itinéraires sont mis à jour à un intervalle prédéterminé.

**3.** Procédé selon la revendication 1, dans lequel la comparaison de la vitesse source et de la vitesse cible est une comparaison directe.

**4.** Appareil (10) pour la détection dynamique de situations de fusion dangereuses, l'appareil comprenant au moins un processeur (14) et au moins une mémoire non transitoire (16) comportant des instructions de code de programme informatique, les instructions de code de programme informatique étant configurées pour, lorsqu'elles sont exécutées, amener l'appareil à :

obtenir des informations de vitesse pour un ou plusieurs segments de route, dans lequel les informations de vitesse comprennent des informations de vitesse de circulation au niveau de la voie,
sur la base des informations de vitesse, déterminer une vitesse source d'une voie source (300) et une vitesse cible d'une voie cible (310) ;
déterminer une valeur de situation de fusion dangereuse sur la base d'une comparaison de la vitesse source et de la vitesse cible,
déterminer qu'un cas de fusion de la voie source dans la voie cible constituerait une situation de fusion dangereuse sur la base de la valeur de situation de fusion dangereuse ;
exécuter les étapes précédentes de manière répétée sur l'intégralité d'un ou de plusieurs itinéraires vers une destination pour déterminer un ou plusieurs indicateurs de fusion respectifs, dans lequel chaque indicateur de fusion est un agrégat d'une pluralité de valeurs de situation de fusion dangereuse calculées le long d'un itinéraire respectif ;
modifier un itinéraire projeté vers la destination en un meilleur itinéraire vers la destination, dans lequel le meilleur itinéraire est déterminé sur la base d'un temps de trajet et de l'indicateur de fusion pour chacun des un ou plusieurs itinéraires ; et
fournir un signal sur la base de la détermination d'au moins une situation de fusion dangereuse, dans lequel le signal est configuré pour provoquer la modification de l'un des itinéraires d'un véhicule autonome (320) vers l'itinéraire projeté et modifié sans interaction du conducteur et la communication d'un message comportant l'itinéraire projeté et modifié à un conducteur d'un véhicule (320).

**5.** Appareil selon la revendication 4, dans lequel les un ou plusieurs indicateurs de fusion pour un ou plusieurs itinéraires sont mis à jour à un intervalle prédéterminé.

**6.** Appareil selon la revendication 4, dans lequel la comparaison de la vitesse source et de la vitesse cible est une comparaison directe.

**7.** Produit programme informatique comprenant au moins un support de stockage non transitoire lisible par ordinateur dans lequel sont stockées des parties de code de programme exécutables par ordinateur, les parties de code de programme exécutables par ordinateur comprenant des instructions de code de programme qui, lorsque le code de programme est exécuté par un ordinateur, amènent l'ordinateur à effectuer les étapes suivantes de :

obtention d'informations de vitesse pour un ou plusieurs segments de route, dans lequel les informations de vitesse comprennent des informations de vitesse de circulation au niveau de la voie,

sur la base des informations de vitesse, détermination d'une vitesse source d'une voie source (300) et d'une vitesse cible d'une voie cible (310) ;

détermination d'une valeur de situation de fusion dangereuse sur la base d'une comparaison de la vitesse source et de la vitesse cible,

détermination du fait qu'un cas de fusion de la voie source dans la voie cible constituerait une situation de fusion dangereuse sur la base de la valeur de situation de fusion dangereuse ;

exécution des étapes précédentes de manière répétée sur l'intégralité d'un ou de plusieurs itinéraires vers une destination pour déterminer un ou plusieurs indicateurs de fusion respectifs, dans lequel chaque indicateur de fusion est un agrégat d'une pluralité de valeurs de situation de fusion dangereuse calculées le long d'un itinéraire respectif ;

modification d'un itinéraire projeté vers la destination en un meilleur itinéraire vers la destination, dans lequel le meilleur itinéraire est déterminé sur la base d'un temps de trajet et de l'indicateur de fusion pour chacun des un ou plusieurs itinéraires ; et

fourniture d'un signal sur la base de la détermination d'au moins une situation de fusion dangereuse, dans lequel le signal est configuré pour provoquer la modification de l'un des itinéraires d'un véhicule autonome (320) vers l'itinéraire projeté et modifié sans interaction du conducteur et la communication d'un message comportant l'itinéraire projeté et modifié à un conducteur d'un véhicule (320).

8. Produit programme informatique selon la revendication 7, dans lequel les un ou plusieurs indicateurs de fusion pour un ou plusieurs itinéraires sont mis à jour à un intervalle prédéterminé.

9. Produit programme informatique selon la revendication 7, dans lequel la comparaison de la vitesse source et de la vitesse cible est une comparaison directe.

**Figure 1**

```
┌─────────────────────────────┐
│  Obtain speed information for │ ── 200
│   one or more road segments  │
└─────────────────────────────┘
              │
              ▼
┌─────────────────────────────┐
│  Determine a source speed of a│ ── 210
│  source lane and a target speed│
│  of a target lane based on the│
│       speed information      │
└─────────────────────────────┘
              │
              ▼
┌─────────────────────────────┐
│    Determine that a merging   │
│  instance from the source lane│ ── 220
│  into the target lane would be a│
│  dangerous merging situation  │
│  based on a comparison of the │
│   source speed and the target │
│            speed             │
└─────────────────────────────┘
              │
              ▼
┌─────────────────────────────┐
│  Provide a signal based on the│ ── 230
│  determination of the dangerous│
│       merging situation      │
└─────────────────────────────┘
              │
              ▼
┌─────────────────────────────┐
│     Determine one or more     │
│  merging indicators relating to│ ── 240
│     a number of dangerous     │
│  merging situations along one │
│  or more routes to a destination│
└─────────────────────────────┘
```

# Figure 2

**Figure 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019383626 A1